# EUROPÄISCHE PATENTSCHRIFT

(11) **EP 2 407 267 B1**
(45) Veröffentlichungstag und Bekanntmachung des Hinweises auf die Patenterteilung: **01.01.2014**
(21) Anmeldenummer: 10401100.2
(22) Anmeldetag: 14.07.2010
(51) Int. Cl.: B23K 9/28, B23K 9/29, B23K 9/32, B23K 9/173

(54) **Schweißbrenner mit einem einen Isolierschlauch aufweisenden Brennerhals**
Welding torch with a neck comprising an insulated conduit
Torche de soudage avec un nez comprenant un flexible isolé

(43) Veröffentlichungstag der Anmeldung: 18.01.2012
(73) Patentinhaber: EWM Hightec Welding GmbH, 56271 Mündersbach (DE)
(72) Erfinder: Vetten, Adrian, 57629 Steinebach (DE)
(74) Vertreter: Steiniger, Carmen

(56) Entgegenhaltungen:
- EP-A1- 0 074 106
- DE-A1-102004 008 609
- DE-U1- 8 325 340
- FR-A1- 2 358 233

## Beschreibung

Die Erfindung betrifft einen Schweißbrenner gemäß dem Oberbegriff des Anspruchs 1 (siehe, z.B., FR 2 358 233 A).

Die Druckschrift FR 2 358 233 A beinhaltet ein Schweißwerkzeug zum Elektroschweißen mit einem Kühlmittelkreis, der eine Kühlmittelzuführung in den Wärme erzeugenden und zu kühlenden Bereich und eine Kühlmittelabführung aus diesem Bereich aufweist. Sowohl die Kühlmittelzuführung als auch die Kühlmittelabführung werden aus jeweils einem Paar konzentrisch zueinander liegender Rohre ausgebildet. In einer offenbarten Schutzgas-Schweißpistole kann zwischen den Rohrpaaren, die die Kühlmittelkreise bilden, ein Ringraum für das Schutzgas aus einem elektrischen Isoliermaterial mit Längsnuten ausgebildet sein.

Der in der Druckschrift FR 2 358 233 A beschriebene Schweißbrenner weist einen mehrteiligen Brenneranschluss auf. Dieser besteht aus einem Anfangsgehäuse, einer Isoliermuffe und einem Zuführungsgehäuse. Das Zuführungsgehäuse ist elektrisch mit dem stromleitenden Innenbereich des Schweißbrenners verbunden.

In der Druckschrift DE 83 25 340 U1 ist ein flexibler Brennerhals für elektrische Schutzgasschweißbrenner mit einer Luft- oder Gaskühlung offenbart. Der beschriebene Brennerhals ist durch einen isolierenden Außenschlauch nach außen hin abgeschlossen und isoliert.

Die Druckschrift EP 0 074 106 A1 beinhaltet einen wassergekühlten Schutzgasschweißbrenner. Dieser besitzt ein inneres Profilrohr, welches auf der Außenseite Nuten aufweist, die als Luft-Gaskanäle dienen. Das innere Profilrohr ist von einer Isolierschicht umgeben. Daran schließt sich koaxial ein äußeres Profilrohr mit Längsnuten an, wobei die gesamte Konstruktion von einem Außenrohr umschlossen ist. Alle in dem Brennerhals des Schweißbrenners vorhandenen Rohre werden in einen Brennerkörper hineingeführt. Dabei wird das innere Profilrohr nur bis zu einer isolierenden Dichtung des Brennerkörpers isoliert. Ein Anschlussteil des Brennerkörpers steht mit dem inneren Profilrohr in Verbindung und ist dann, wenn es aus Metall besteht, elektrisch mit dem Brennerrohr verbunden.

Schweißbrenner der oben genannten Gattung werden im Stand der Technik unter anderem zum Metallinertgasschweißen eingesetzt. Beispielsweise ist ein solcher Schweißbrenner in der Druckschrift DE 10 2004 008 609 A1 beschrieben. Bei diesem Schweißbrenner wird der Schweißstrom über die Kontaktdüse dem im Innenrohr befindlichen Schweißdraht zugeführt. Dabei sind die äußeren Teile des Brenners elektrisch von dem Innenrohr isoliert, um ein Fließen von Schweißströmen über das Brennergehäuse zu verhindern. Im Schweißprozess erfolgt eine Erwärmung des Schweißdrahtes und die Wärme wird teilweise in den Schweißbrenner geleitet.

Dabei hat es sich als günstig erwiesen, das im Schweißprozess ohnehin verwendete Schweißgas, das meist ein inertes Schutzgas ist, möglichst effektiv zur Kühlung des Innenrohres einzusetzen. Eine effektive Kühlung des Innenrohres wird erreicht, wenn das Gas in flachen Kanälen an der Außenseite des Innenrohres entlang strömt. Zur Erzeugung von Gasströmungskanälen außen am Innenrohr wird im Stand der Technik ein Mantelrohr auf dem Innenrohr verwendet. Der Verbund aus Innenrohr und Mantelrohr wird dann durch einen Isolierschlauch von einem äußeren Gehäuserohr isoliert. Die Herstellung eines so ausgebildeten Brennerhalses ist aufwändig.

Des Weiteren ist zwischen dem metallischen Brenneranschlussblock, an dem das Innenrohr mit dem Mantelrohr befestigt wird, und dem Außenrohr eine elektrische Isolierung nötig. Diese elektrische Isolierung ist an verfügbaren Brennern eine Schwachstelle bezüglich sicherer elektrischer Isolation und bezüglich mechanischer Stabilität. So kann es bei einer Berührung zwischen einem stromführenden Teil des Schweißbrenners und dem Potenzial eines Werkstücks zu der Ausbildung eines Lichtbogens oder eines Kurzschlusses kommen. Dies kann Beschädigungen des Schweißbrenners oder des Werkstücks, Verletzungen des Schweißers und/oder Brände zur Folge haben. Zwar kann im Stand der Technik eine solche Gefahr vermindert werden, indem stromführende Teile des Schweißbrenners mit einer Isolierschicht versehen werden. Eine solche Isolierschicht kann aber zerstört werden und die Gefahr entsteht aufs Neue.

Es ist daher die Aufgabe der vorliegenden Erfindung, einen Schweißbrenner vorzuschlagen, der einfach und kostengünstig herstellbar ist und bei dem eine sichere elektrische Isolierung der Außenteile des Schweißbrenners gewährleistet ist.

Der erfindungsgemäße Schweißbrenner ist im Anspruch 1 definiert.

Der erfindungsgemäße Schweißbrenner weist durch Weglassen des im Stand der Technik üblichen Mantelrohres einen einfacheren Aufbau auf, der zu einer wesentlich vereinfachten Herstellung des Schweißbrenners führt. Dieser vereinfachte Aufbau des Brennerhalses ist mit einem gegenüber dem Stand der Technik veränderten Aufbau des Brenneranschlussblocks verbunden.

So wird in dem erfindungsgemäßen Schweißbrenner das Innenrohr nicht am Brenneranschlussblock befestigt, wie es im Stand der Technik üblich ist, sondern es erstreckt sich als ein Rohr in den Brenneranschlussblock hinein oder durch den Brenneranschlussblock hindurch. Der Isolierschlauch erstreckt sich in dem erfindungsgemäßen Schweißbrenner ebenfalls in den Brenneranschlussblock hinein. Durch den Isolierschlauch und den Isolierkörper wird eine vollständige elektrische Isolierung des Brenneranschlussblocks von dem Innenrohr erreicht.

Die elektrische Isolation erfolgt in der Weise, dass der komplette Außenbereich des Schweißbrenners vom Potenzial des Schweißstromes frei ist. Damit ist eine hohe Sicherheit verbunden. Durch die vorliegende Erfindung besteht keine Notwendigkeit zur elektrische Isolation von Bereichen des Schweißbrenners durch eine äußere Isolierschicht oder in besonderer Weise angebrachte Elemente, wie beispielsweise eine isolierte Schutzgasdüse. Durch den wenigstens einen radialen Gaskanal, der durch die Strukturierung des Isolierkörpers ausgebildet ist, kann das Schutzgas an der Stirnseite des Isolierschlauches vorbei in den Zwischenraum zwischen Innenrohr und Isolierschlauch bis hin zum Brennerkopf strömen.

Die Zuführung des Schutzgases erfolgt dabei zunächst durch die Schutzgaszuführung, die typischerweise in Form einer Bohrung im Brenneranschlussblock ausgebildet ist. Da die Zuführung des Schutzgases unsymmetrisch zum Innenrohr erfolgt, soll das Schutzgas möglichst gleichmäßig um das Innenrohr herum verteilt werden. Zu diesem Zweck ist erfindungsgemäß innerhalb des Brenneranschlussblocks und um das Innenrohr der äußere Ringkanal ausgebildet, durch welchen sich das Schutzgas um das Innenrohr herum verteilen kann. Das Schutzgas strömt somit ausgehend von der Bohrung im Brenneranschlussblock über den äußeren Ringkanal und die radialen Gaskanäle zu dem Zwischenraum zwischen Innenrohr und Isolierschlauch bzw. gegebenenfalls auch zu dem Zwischenraum zwischen Isolierschlauch und Außenrohr.

Damit bietet die vorliegende Erfindung sämtliche Vorteile einer getrennten Gasführung, bei der das Schutzgas in einem von der Drahtführung getrennten Kanal vom Anschluss am Brenneranschlussblock zu der Schutzgasdüse am Brennerkopf geleitet wird. Die Führung des Schutzgases am äußeren Mantel des Innenrohres bringt insbesondere eine sehr gute Kühlwirkung mit sich, indem sowohl der Brenneranschlussblock, der sich daran anschließende Brennerhals und der Brennerkopf des Schweißbrenners durch das hindurchströmende Schutzgas gekühlt werden.

Ein wesentlicher Vorteil der vorliegenden Erfindung ist es, dass kein Sauerstoff mit in die Gasführung eingespült wird. Ferner ist es bei Einsatz des erfindungsgemäßen Schweißbrenners möglich, Kunststoffschläuche mit relativ kleinem Durchmesser für die Gaszuführung einzusetzen.

In einer besonders vorteilhaften Ausführungsform der vorliegenden Erfindung weist das Innenrohr auf seiner Außenseite und/oder der Isolierschlauch an seiner Innenseite Gasführungskanäle auf. Dadurch kann der bereits im Stand der Technik verwendete Isolierschlauch in dem erfindungsgemäßen Schweißbrenner neben der Aufgabe der elektrischen Isolierung des Innenrohres von dem Außenrohr zusätzlich die Aufgabe der Ausbildung umfangsseitig geschlossener Gaskanäle an der Innenrohraußenwand erfüllen.

Die radialen Gaskanäle des Isolierkörpers bilden bei dieser Ausführungsvariante die Quellen der offenen Gasführungskanäle am Innenrohr. Vorzugsweise ist jedem Gasführungskanal am Innenrohr ein radialer Gaskanal im Isolierkörper zugeordnet, sodass jeder radiale Gaskanal als Quelle für einen Gasführungskanal des Innenrohres dient. Durch die direkte Zuordnung von radialen Gaskanälen zu den Gasführungskanälen kann eine günstige Gasströmung durch die radialen Gaskanäle, ein geringer Gasströmungswiderstand und somit ein maximaler Gasfluss erreicht werden. Es kann aber auch eine größere oder kleinere Zahl von radialen Gaskanälen zum Einsatz kommen.

Grundsätzlich ist es in der vorliegenden Erfindung jedoch auch möglich, dass gar keine separaten Gasführungskanäle zwischen Innenrohr und Isolierschlauch vorgesehen sind. Beispielsweise ist es denkbar, den Isolierschlauch aus einem Glasfasergeflecht auszubilden und durch dessen Form die Strömung des Schutzgases zu beeinflussen. Ferner ist es erfindungsgemäß möglich, dass Schutzgas im Bereich zwischen der Außenseite des Isolierschlauches und der Innenseite des Außenrohres fließt.

Der Isolierkörper kann einen zylindrischen Querschnitt aufweisen. Es ist jedoch besonders von Vorteil, wenn der Isolierkörper gemäß einem weiteren Beispiel der vorliegenden Erfindung einen mehreckigen, beispielsweise einen sechseckigen, axialen Querschnitt aufweist. Hierdurch kann der Isolierkörper verdrehsicher in den Brenneranschlussblock eingebracht werden.

Es hat sich besonders bewährt, wenn der Isolierkörper an seiner dem Brennerhals zugewandten Seite mehrere, um den Umfang des Isolierkörpers verteilte, durch die Wandung des Isolierkörpers durchführende Schlitze oder Bohrungen zur Ausbildung mehrerer radialer Gaskanäle aufweist.

Vorzugsweise sind die radialen Gaskanäle durch ringsegmentförmige, axiale Stege voneinander getrennt, welche an ihrem dem Brennerhals zugewandten Ende jeweils einen Abschnitt mit vergrößertem Innendurchmesser zur Ausbildung von Anschlägen für den Isolierschlauch aufweisen, wobei um die Außendurchmesser der Stege der äußere Ringkanal ausgebildet ist.

Zur Herstellung des Schweißbrenners können beispielsweise folgende Materialien verwendet werden: für den Brenneranschlussblock und das Außenrohr Kupfer oder Messing, für das Innenrohr Kupfer oder Messing, für den Isolierkörper eine Keramik und/oder für den Isolationsschlauch ein Teflonmaterial. Alternativ können jedoch auch andere geeignete Materialien bzw. Materialkombinationen eingesetzt werden.

In einer vorteilhaften Ausbildung des erfindungsgemäßen Schweißbrenners ist zwischen dem Brenneranschlussblock und dem Außenrohr des Brennerhalses eine mechanisch feste Verbindung vorgesehen. An dem Übergang zwischen dem Brennerhals und dem Brenneranschlussblock treten ebenso große mechanische Belastungen wie an anderen Stellen des Brennerhalses auf. Durch die vorgesehene mechanisch feste Verbindung zwischen dem Brenneranschlussblock und dem Außenrohr wird dem erfindungsgemäßen Schweißbrenner an dieser Stelle eine ausreichende Festigkeit gegeben. Vorzugsweise ist die mechanisch feste Verbindung eine metallische Schweiß- oder Lötverbindung. Metallische Schweiß- oder Lötverbindungen sind kostengünstige Verbindungen mit hoher mechanischer Belastbarkeit und mit guter Elastizität. Bei dem erfindungsgemäßen Schweißbrenner ist darauf zu achten, dass entweder solche Materialien und ein solcher Schweißprozess verwendet werden, dass der in der Nähe der Schweißnaht befindliche Isolierschlauch thermisch nicht überlastet wird oder dass der Isolierschlauch erst nach dem Anschweißen des Außenrohres in das Außenrohr eingeführt wird. Statt einer Schweiß- oder Lötverbindung kann auch eine andere geeignete Verbindung, beispielsweise eine Kleb- oder Schraubverbindung, eingesetzt werden.

Gemäß einer günstigen Weiterbildung des erfindungsgemäßen Schweißbrenners ist ein innerer Ringkanal zwischen einer Innenwand des Isolierkörpers und einer Außenwand des Innenrohres vorgesehen, wobei der innere Ringkanal durch eine abschnittsweise Innendurchmesservergrößerung des Isolierkörpers und/oder durch eine abschnittsweise Außendurchmesserverringerung des Innenrohres ausgebildet ist. Die zirkulare Gasverteilung um das Innenrohr herum erfolgt erfindungsgemäß durch den äußeren Ringkanal, wobei der äußere Ringkanal innerhalb und/oder außerhalb des Isolierkörpers vorgesehen sein kann. Wenn der äußere Ringkanal außerhalb des Isolierkörpers vorgesehen ist, kann innerhalb des Isolierkörpers ein weiterer Ringkanal, der innere Ringkanal, vorgesehen sein. Dabei kann, wie oben erwähnt, zur Ausbildung des inneren Ringkanals Material von dem Innenrohr von der Innenseite des Isolierkörpers abgetragen sein, sodass ein ringförmiger Freiraum entsteht, der den inneren Ringkanal bildet. Durch den inneren Ringkanal kann eine zirkular gleichmäßige Gasverteilung, die bereits durch den äußeren Ringkanal erzeugt wird, weiter verbessert werden.

In einer vorteilhaften Ausführungsform des erfindungsgemäßen Schweißbrenners weist der Isolierkörper auf der dem Brennerhals abgewandten Seite ein Innengewinde zum Eingreifen in ein auf dem Innenrohr ausgebildetes Außengewinde auf. Durch die ineinander greifenden Gewinde von Innenrohr und Isolierkörper kann eine dauerhaft zuverlässige Verbindung realisiert werden, bei der auch die erforderliche Position des Isolierkörpers auf dem Innenrohr einfach eingestellt werden kann. Eine Verbindung zwischen Innenrohr und Isolierkörper kann jedoch auch auf eine andere geeignete Weise, beispielsweise durch Pressen oder Kleben, hergestellt werden.

Bei Verwendung eines Gewindes zur Befestigung des Isolierkörpers auf dem Innenrohr ist in einer günstigen Ausgestaltung der vorliegenden Erfindung zwischen dem Innengewinde des Isolierkörpers und dem Außengewinde des Innenrohres eine Flüssigdichtung vorgesehen. Durch die Verwendung der Flüssigdichtung ist eine einfache Montage des Schweißbrenners möglich, und es wird dennoch eine zuverlässige Gasabdichtung des Gewindes erreicht.

In einem weiteren günstigen Ausführungsbeispiel des erfindungsgemäßen Schweißbrenners ist in dem Brennerkopf ein Brennerkopfanschlag für den Isolierschlauch vorgesehen. Durch den Brennerkopfanschlag ist der Isolierschlauch allseitig von mechanisch formbeständigen Bauteilen umgeben. Dadurch wird eine Lageverschiebung des Isolierschlauches und somit auch ein Ausfall der elektrischen Isolation dauerhaft vermieden. Die Lage des Isolierschlauches kann jedoch auch auf eine andere geeignete Weise mechanisch gesichert werden.

Die Isolation kann in einer Variante der vorliegenden Erfindung noch verbessert werden, wenn der Isolierkörper zum Brenneranschlussblock hin durch eine Flüssigdichtung oder einen O-Ring abgedichtet ist.

Bevorzugte Ausführungsformen der vorliegenden Erfindung, deren prinzipieller Aufbau, deren Funktion und Vorteile sollen im Folgenden anhand von Figuren näher erläutert werden, wobei
- Figur 1: schematisch einen Längsschnitt durch einen Abschnitt einer Ausführungsform des erfindungsgemäßen Schweißbrenners zeigt;
- Figur 2: schematisch einen Querschnitt durch eine Ausführungsform des erfindungsgemäßen Schweißbrenners an der in Figur 1 markierten Position A zeigt;
- Figur 3: schematisch einen Querschnitt durch eine Ausführungsform des erfindungsgemäßen Schweißbrenners an der in Figur 1 bezeichneten Stelle B zeigt; und
- Figur 4: schematisch eine perspektivische Ansicht eines in einer Ausführungsform des erfindungsgemäßen Schweißbrenners verwendeten Isolierkörpers zeigt.

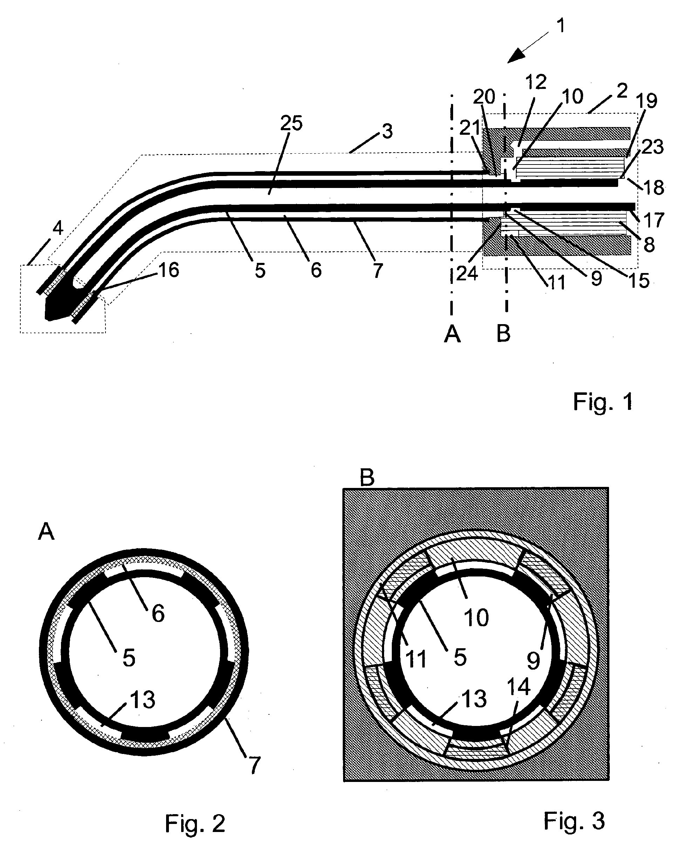

Fig. 1 ist eine schematische Darstellung eines Abschnittes einer Ausführungsform eines erfindungsgemäßen Schweißbrenners 1 in einem Längsschnitt durch die Mitte des Schweißbrenners 1. Der Schweißbrenner 1 weist einen Brenneranschlussblock 2, der ein Handgriff für manuelles Schweißen oder in einem Schweißroboter integriert sein kann, einen mit einem Ende an dem Brenneranschlussblock 2 anschließenden Brennerhals 3 und einen am anderen Ende des Brennerhalses 3 vorgesehenen Brennerkopf 4 auf. An dem Brennerkopf 4 ist eine Schutzgasdüse vorgesehen.

Der Brenneranschlussblock 2 ist in dem dargestellten Ausführungsbeispiel zylinderförmig ausgeführt und weist eine durchgängige Innenbohrung mit sich abschnittsweise ändernden Bohrungsdurchmessern, aber identischer Mittelachse auf. An seiner dem Brennerhals 3 abgewandten Seite weist der Brenneranschlussblock 2 einen Bohrungsabschnitt 19 mit größerem Durchmesser auf, wobei an der dem Brennerhals 3 zugewandten Seite des Brenneranschlussblocks 2 ein Bohrungsabschnitt 20 mit geringerem Durchmesser vorgesehen ist. Der Bohrungsabschnitt 20 weist an der Schnittstelle zum Brennerhals 3 eine stufenförmige Aufweitung 21 auf, wobei durch die Stufe ein Anschlag für ein Außenrohr 7 des Brennerhalses 3 ausgebildet ist. Der Innendurchmesser des Bohrungsabschnittes 19 ist größer als der der Aufweitung 21.

Ferner ist in dem Brenneranschlussblock 2 eine Schutzgasleitung 12 vorgesehen, deren Bohrung parallel zu den Bohrungen 19, 20 geführt ist. Die Schutzgasleitung 12 ist mit dem Bohrungsabschnitt 20 gasdurchlässig verbunden.

In den Bohrungsabschnitt 19 des Brenneranschlussblocks 2 ist ein Isolierkörper 8, der aus einem elektrisch isolierenden Material, wie beispielsweise Kunststoff oder Keramik, besteht, eingesetzt. Der Isolierkörper 8 weist in dem gezeigten Ausführungsbeispiel einen zylindrischen Querschnitt in axialer Richtung des Schweißbrenners 1 auf, kann jedoch in anderen, nicht gezeigten Varianten der Erfindung beispielsweise auch einen mehreckigen, z. B. sechseckigen, axialen Querschnitt aufweisen, wodurch er verdrehsicher in dem Brenneranschlussblock 2 eingebaut werden kann.

Der Isolierkörper 8 ist gegenüber dem Bohrungsabschnitt 19 durch einen O-Ring 22, der in eine Mantelfläche des Bohrungsabschnittes 19 eingelassen ist, gasdicht abgedichtet. Anstelle des O-Rings 22 kann in anderen, nicht gezeigten Ausführungsformen der vorliegenden Erfindung beispielsweise auch eine Flüssigdichtung eingesetzt werden, um den Isolierkörper 8 zum Brenneranschlussblock 2 abzudichten.

Der Isolierkörper 8 weist eine Innenbohrung 23 und in dieser ein Gewinde 18 auf. Dieses Gewinde 18 steht in Eingriff mit einem Rohrgewinde 17 eines durch den Brennerhals 3 und in den Brenneranschlussblock 2 führenden Innenrohres 5. Die Gewindekopplung 17, 18 ist vorzugsweise gasdicht abgedichtet.

Das Innenrohr 5, welches durch den Brennerhals 3 führt und sich in den Brenneranschlussblock 2 hinein fortsetzt, weist in dem gezeigten Ausführungsbeispiel an seiner Außenseite beispielsweise in Fig. 3 dargestellte parallele, um den Umfang des Innenrohres 5 gleichmäßig verteilte, flache, separate Gasführungskanäle 13 auf. Die Gasführungskanäle 13 erstrecken sich ausgehend von einer Endposition im Brenneranschlussblock 2 über den gesamten Brennerhals 3 bis hin zu der Schutzgasdüse im Brennerkopf 4. Grundsätzlich können auch keine Gasführungskanäle 13 an der Außenwand des Innenrohres 3 und/oder stattdessen Gasführungskanäle an oder in der Innenwand des Isolierschlauches 6 vorgesehen sein.

Das Innenrohr 5 besteht vorzugsweise aus einem Metall mit guter elektrischer und thermischer Leitfähigkeit. Beispielsweise haben sich hierfür Kupfer oder Messing bewährt. Das Innenrohr 5 ist zumindest innerhalb des Brennerhalses 3 vollumfänglich von einem Isolierschlauch 6 umgeben, welcher das Außenrohr 7 des Brennerhalses 3 elektrisch von dem Innenrohr 5 isoliert. Der Isolierschlauch 6 besteht aus einem flexiblen, elektrisch isolierenden Material und weist eine hohe Temperaturfestigkeit auf. Beispielsweise haben sich als Materialien für den Isolierschlauch 6 Teflonmaterialien bewährt. Gemäß der Erfindung ist der Isolierschlauch 6 durch einen Anschlag 9 an dem Isolierkörper 8 und einen Brennerkopfanschlag 16 an dem Brennerkopf 4 gegen eine laterale Verschiebung gesichert.

Innerhalb des Brenneranschlussblocks 2 ist eine vollständige Isolierung des Innenrohres 5 vorgesehen. Auf der Seite des Brennerhalses 3 erfüllt das in den Brenneranschlussblock 2 hineinragende Ende des Isolierschlauches 6 die Funktion einer elektrischen Isolation, anschließend wird die Isolation durch den Isolierkörper 8 erreicht. Der Isolierkörper 8 ist auch eine mechanische Halterung für das Innenrohr 5 innerhalb des Brenneranschlussblocks 2.

Ist der Isolierkörper 8 in den Bohrungsabschnitt 19 eingeführt, schlägt eine Stirnfläche 24 des Isolierkörpers 8 an einem Boden des Bohrungsabschnittes 19 an. Von der Stirnfläche 24 her sind in dem in Fig. 1 dargestellten Ausführungsbeispiel der vorliegenden Erfindung in den Isolierkörper 8 Schlitze zur Ausbildung radialer Gaskanäle 10 eingebracht. In anderen, nicht gezeigten Ausführungsvarianten der vorliegenden Erfindung können hier auch radiale Bohrungen in den Isolierkörper 8 zur Ausbildung radialer Gaskanäle 10 eingebracht werden. Grundsätzlich kann auch nur ein radialer Gaskanal 10 in den Isolierkörper 8 eingebracht werden, welcher eine Schutzgaszuführung ausgehend von der Schutzgasleitung 12 bis hin zu dem Zwischenraum zwischen Innenrohr 5 und Isolierschlauch 6 bzw. gegebenenfalls zu den auf dem Innenrohr 5 vorgesehenen Gasführungskanälen 13 erlaubt.

Die radialen Gaskanäle 10 bzw. Schlitze sind voneinander durch Stege 14 getrennt. Im Bereich der radialen Gaskanäle 10 weist der Isolierkörper 8 einen geringeren Durchmesser als auf seiner restlichen Länge auf. Dadurch bildet sich zwischen den Stegen 14 und der Mantelfläche des Bohrungsabschnittes 19 ein äußerer Ringkanal 11 aus. Die Innenbohrung 23 des Isolierkörpers 8 setzt sich bis in den Bereich der radialen Gaskanäle 10 fort und nimmt in ihrem Inneren das Innenrohr 5 auf.

Bei einer alternativen Ausführungsform des erfindungsgemäßen Schweißbrenners 1 kann auf das Einbringen der Schlitze in den Isolierkörper 8 verzichtet werden, indem zwischen der Stirnfläche 24 und dem Boden des Bohrungsabschnittes 19 ein entsprechender axial angeordneter Kanal besteht. Über diesen kann das Schutzgas zwischen dem äußeren Ringkanal 11 und einem weiteren inneren Ringkanal 15 strömen. Ein Verrutschen des Isolierkörpers 8 muss dabei verhindert werden, was nach dem Stand der Technik erfolgen kann.

Beispielsweise kann ein Stift außermittig durch den Bohrungsabschnitt 19, rechtwinklig zu dessen Längsachse, eingebracht werden, oder über ein in den Mantel des Brenneranschlussblocks 2 eingebrachtes Gewinde kann über eine Schraube auf den Außenmantel des Isolierkörpers 8 drücken.

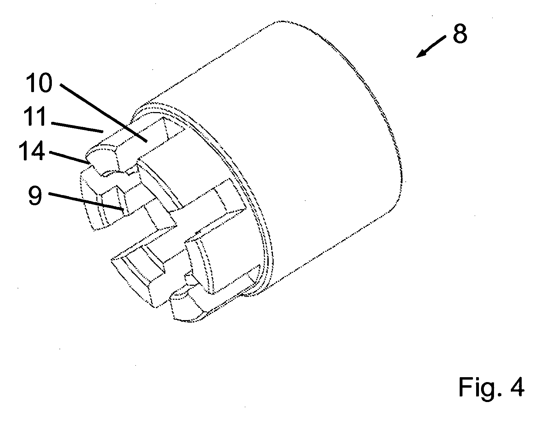

Der das Innenrohr 5 auf einem Teil seiner Länge umgebende Isolierschlauch 6 ist soweit auf dem Innenrohr 5 geführt, dass er durch die Bohrungsabschnitte 21, 20 hindurch bis zu den im Isolierkörper 8 durch die Schlitze ausgebildeten radialen Gaskanälen 10 reicht. Der Isolierkörper 8 weist in dem Bereich der radialen Gaskanäle 10 einen beispielsweise auch in Fig. 4 dargestellten Anschlag 9 für den Isolierschlauch 6 auf. Der Anschlag 9 gemäß der Erfindung wird durch eine Aufweitung der Innenbohrung 23 des Isolierkörpers 8 gebildet, wobei die Aufweitung einen größeren Durchmesser als der Isolierschlauch 6 aufweist.

Anstelle des Anschlags 9 und auch gemäß der Erfindung kann auch eine Arretierung des Isolierschlauches 6 an dem Isolierkörper 8, die beispielsweise durch wenigstens eine Schraube oder Klemme realisiert ist, vorgesehen sein.

Zwischen den Stegen 14 und einem verjüngten Bereich des Innenrohres 5 bildet sich ein oben bereits erwähnter innerer Ringkanal 15 aus. Der innere Ringkanal 15 dient ebenfalls einer gleichmäßigen Verteilung von Schutzgas um das Innenrohr 5 herum.

Das Innenrohr 5 weist in seinem Inneren eine Drahtführung 25 auf, durch die hindurch ein Schweißdraht, der hier nicht dargestellt ist, geführt wird.

Der erfindungsgemäße Schweißbrenner 1 ist eine dreidimensionale Vorrichtung. In den folgenden Figuren ist jeweils ein Querschnitt durch den Schweißbrenner 1 an den Positionen A und B von Fig. 1 dargestellt, wobei die Querschnittsflächen orthogonal zu der Längsschnittfläche von Fig. 1 sind.

Fig. 2 zeigt einen schematischen axialen Querschnitt durch den Brennerhals 3 nach der Ausführungsform des erfindungsgemäßen Schweißbrenners 1 aus Fig. 1 an der mit A bezeichneten Position. An der Außenseite des Innenrohres 5 sind Gasführungskanäle 13 ausgebildet. Außerhalb des Innenrohres 5 ist der Isolierschlauch 6 vorgesehen, welcher das Außenrohr 7 elektrisch von dem Innenrohr 5 isoliert.

Fig. 3 zeigt einen schematischen Querschnitt durch den Brenneranschlussblock 2 einer Ausführungsform des erfindungsgemäßen Schweißbrenners 1 an der in Fig. 1 mit B bezeichneten Position. An das Innenrohr 5 schließen sich hier Stege 14 an, die in dem Isolierkörper 8 ausgebildet sind. In den Stegen 14 sind in dem dargestellten Ausführungsbeispiel Anschläge 9 für den Isolierschlauch 6 ausgebildet. Zwischen den Stegen 14 sind radiale Gaskanäle 10 ausgebildet, durch welche Schutzgas in die Gasführungskanäle 13 hineinströmen kann. In dem dargestellten Ausführungsbeispiel weist der Isolierkörper 8 im Bereich der Stege 14 einen reduzierten Durchmesser auf, wodurch ein äußerer Ringkanal 11 ausgebildet wird, der eine Verbindung zwischen den radialen Gaskanälen 10 herstellt.

Fig. 4 ist eine räumliche Darstellung eines Ausführungsbeispiels eines Isolierkörpers 8, der in einer Ausführungsform des erfindungsgemäßen Schweißbrenners 1 Verwendung findet. Der Isolierkörper 8 weist Anschläge 9 für den Isolierschlauch 6 auf. In dem Isolierkörper 8 sind desweiteren Stege 14 ausgebildet, zwischen welchen sich die radialen Gaskanäle 10 befinden. In dem dargestellten Ausführungsbeispiel sind die radialen Gaskanäle 10 Schlitze innerhalb des Isolierkörpers 8. In anderen, nicht gezeigten Ausführungsbeispielen der vorliegenden Erfindung können auch geschlossene Kanäle, wie beispielsweise Bohrungen, zum Einsatz kommen. In dem dargestellten Ausführungsbeispiel ist der Isolierkörper 8 im Bereich der Stege 14 mit einem reduzierten Durchmesser ausgebildet, sodass außerhalb der Stege 14 ein innerer Ringkanal 11 ausgebildet ist.

Im Folgenden soll die Funktionsweise der in den Figuren 1 bis 4 dargestellten Ausführungsformen des erfindungsgemäßen Schweißbrenners 1 näher erläutert werden.

In dem erfindungsgemäßen Schweißbrenner 1 verläuft die Gasführung durch den Brennerhals 3 entlang der zwischen dem Innenrohr 5 und dem Isolierschlauch 6 vorgesehenen Gasführungskanäle 13 getrennt vom Schweißdraht, der in der Drahtführung 25 geführt wird. Das Schutzgas wird über einen in den Figuren nicht gezeigten Anschluss in den Brenneranschlussblock 2 eingebracht. Durch den Brenneranschlussblock 2 wird das Schutzgas über die Schutzgasleitung 12 geleitet und gelangt damit in den äußeren Ringkanal 11. Der äußere Ringkanal 11 steht in Verbindung mit den durch die Schlitze in dem Isolierkörper 8 ausgebildeten radialen Gaskanälen 10, über welche das Schutzgas zum inneren Ringkanal 15 gelangt. Vom inneren Ringkanal 15 strömt das Schutzgas durch die Gasführungskanäle 13 durch den Brennerhals 3 hindurch und gelangt über einen hier nicht dargestellten Gasverteiler in die am Brennerkopf 4 vorgesehene Schutzgasdüse hinein und von da aus zur Schweißstelle.

Die Stromführung, die der Stromversorgung des Schweißdrahtes dient, erfolgt in den gezeigten Ausführungsbeispielen über das Innenrohr 5. Dieses weist einen Anschluss für den elektrischen Strom, den Schweißstrom, auf. Dieser Anschluss ist in den Figuren nicht dargestellt. Über das Innenrohr 5 wird der Schweißstrom über geeignete Mittel, wie Draht, Kontaktdüse oder Düsenstock, zur Schweißstelle geleitet. Dazu ist das Innenrohr 5 vollständig gegenüber den anderen Elementen des Schweißbrenners 1 isoliert, sodass diese nicht das Potenzial der stromführenden Teile des Schweißbrenners 1 aufweisen. Die Isolierung zwischen dem Innenrohr 5 und dem Brenneranschlussblock 2 erfolgt über den Isolierkörper 8. Bei der Durchführung des Innenrohrs 5 durch den Brenneranschlussblock 2 durch den Bohrungsabschnitt 21, 20 hindurch erfolgt die Isolation zwischen dem Brenneranschlussblock 2 und dem Innenrohr 5 durch den Isolierschlauch 6. Dieser übernimmt weiterhin die Isolation zwischen dem Innenrohr 5 und dem Außenrohr 7 über die gesamte Länge des Brennerhalses 3 hinweg.

## Patentansprüche

1. Schweißbrenner (1) mit einer Schutzgaszuführung, einem Brenneranschlussblock (2), einem an einem Ende an den Brenneranschlussblock (2) anschließenden Brennerhals (3) und einem am anderen Ende des Brennerhalses (3) vorgesehenen Brennerkopf (4), wobei der Brennerhals (3) ein Innenrohr (5), ein Außenrohr (7) und einen zwischen dem Innenrohr (5) und dem Außenrohr (7) vorgesehenen Isolierschlauch (6) aufweist, welcher außerhalb des Innenrohrs (5) vorgesehen ist,
wobei
der Isolierschlauch (6) in direktem Kontakt mit dem Innenrohr (5) ist und bis in den Brenneranschlussblock (2) führt und dass in dem Brenneranschlussblock (2) ein Isolierkörper (8) vorgesehen ist, durch welchen das Innenrohr (5) in den Brenneransctrlussblock (2) führt, **dadurch gekennzeichnet, dass** der Isolierkörper (8) an seiner dem Brennerhals (3) zugewandten Seite unter Ausbildung wenigstens eines radialen Gaskanals (10) strukturiert ist, und wobei in dem Brenneranschlussblock (2) ein äußerer, mit dem wenigstens einen radialen Gaskanal (10) gekoppelter Ringkanal (11) um das Innenrohr (5) zur Verteilung eines Schutzgases vorgesehen ist, wobei der Isolierkörper (8) eine Arretierung oder einen Anschlag (9) für den Isolierschlauch (6) aufweist und der äußere Ringkanal (11) auf der dem Brennerhals (3) abgewandten Seite der Arretierung oder des Anschlages (9) vorgesehen ist.

2. Schweißbrenner nach Anspruch 1, **dadurch gekennzeichnet, dass** das Innenrohr (5) auf seiner Außenseite und/oder der Isolierschlauch (6) an seiner Innenseite Gasführungskanäle (13) aufweist.

3. Schweißbrenner nach einem der vorhergehenden Ansprüche, **dadurch gekennzeichnet, dass** der Isollerkörper (8) einen mehreckigen axialen Querschnitt aufweist.

4. Schweißbrenner nach einem der vorhergehenden Ansprüche, **dadurch gekennzeichnet, dass** der Isolierkörper (8) an seiner dem Brennerhals (3) zugewandten Seite mehrere, um den Umfang des Isolierkörpers (8) verteilte, durch die Wandung des Isollerkörpers (8) durchführende Schlitze oder Bohrungen zur Ausbildung radialer Gaskanälen (10) aufweist.

5. Schweißbrenner nach Anspruch 4, **dadurch gekennzeichnet, dass** die radialen Gaskanäle (10) durch ringsegmentförmige axiale Stege (14) voneinander getrennt sind, welche an ihrem dem Brennerhals (3) zugewandten Ende jeweils einen Abschnitt mit vergrößertem Innendurchmesser zur Ausbildung von Anschlägen (9) für den Isolierschlauch (6) aufweisen, wobei um die Außendurchmesser der Stege (14) der äußere Ringkanal (11) ausgebildet ist.

6. Schweißbrenner nach einem der vorhergehenden Ansprüche, **dadurch gekennzeichnet, dass** zwischen dem Brenneranschlussblock (2) und dem Außenrohr (7) des Brennerhalses (3) eine mechanisch feste Verbindung vorgesehen ist.

7. Schweißbrenner nach Anspruch 6, **dadurch gekennzeichnet, dass** die mechanisch feste Verbindung eine metallische Schweißverbindung, eine Lötverbindung, eine Klebeverbindung oder eine Schraubverbindung ist.

8. Schweißbrenner nach einem der vorhergehenden Ansprüche, **dadurch gekennzeichnet, dass** ein innerer Ringkanal (15) zwischen einer Innenwand des Isolierkörpers (8) und einer Außenwand des Innenrohres (5) vorgesehen ist, wobei der innere Ringkanal (15) durch eine abschnittsweise Innendurchmesservergrößerung des Isolierkörpers (8) und/oder durch eine abschnittsweise Verringerung des Innenrohrs (5) ausgebildet ist.

9. Schweißbrenner nach einem der vorhergehenden Ansprüche, **dadurch gekennzeichnet, dass** der Isolierkörper (8) auf seiner dem Brennerhals (3) abgewandten Seite ein Innengewinde (17) zum Eingreifen in ein auf dem Innenrohr (5) ausgebildetes Außengewinde (18) aufweist.

10. Schweißbrenner nach Anspruch 9, **dadurch gekennzeichnet, dass** zwischen dem Innengewinde (17) des Isolierkörpers (8) und dem Außengewinde (18) des Innenrohres (5) eine Flüssigdichtung vorgesehen ist.

11. Schweißbrenner nach einem der vorhergehenden Ansprüche, **dadurch gekennzeichnet, dass** in dem Brennerkopf (4) ein Brennerkopfanschlag (16) für den Isolierschlauch (6) vorgesehen ist.

12. Schweißbrenner nach einem der vorhergehenden Ansprüche, **dadurch gekennzeichnet, dass** der Isolierkörper (8) zum Brenneranschlussblock (2) hin durch eine Flüssigdichtung oder einen O-Ring abgedichtet ist.

## Claims

1. Welding torch (1) comprising a shielding-gas supply, a torch connection block (2), a torch neck (3) connected to the torch connection block (2) at one end, and a torch head (4) provided at the other end of the torch neck (3), the torch neck (3) comprising an inner tube (5), an outer tube (7) and insulating tubing (6) provided between the inner tube (5) and the outer tube (7), which insulating tubing is provided outside the inner tube (5), the insulating tubing (6) being in direct contact with the inner tube (5) and leading into the torch connection block (2), and an insulating member (8) being provided in the torch connection block (2), through which insulating member the inner tube (5) leads into the torch connection block (2), **characterised in that** the insulating member (8) is structured on the side thereof facing the torch neck (3) while forming at least one radial gas duct (10), an outer annular duct (11) around the inner tube (5) being provided in the torch connection block (2) for distributing a shielding gas, which outer annular duct is coupled to the at least one radial gas duct (10), the insulating member (8) comprising a locking means or a stop (9) for the insulating tubing (6) and the outer annular duct (11) being provided on the side of the locking means or the stop (9) facing away from the torch neck (3).

2. Welding torch according to claim 1, **characterised in that** the inner tube (5) comprises gas supply ducts (13) on the outside thereof and/or the insulating tubing (6) comprises gas supply ducts on the inside thereof.

3. Welding torch according to either of the preceding claims, **characterised in that** the insulating member (8) has a polygonal axial cross section.

4. Welding torch according to any of the preceding claims, **characterised in that** the insulating member (8) comprises on the side thereof facing the torch neck (3) a plurality of slots or holes which are distributed around the circumference of the insulating body (8) and lead through the wall of the insulating member (8) for forming radial gas ducts (10).

5. Welding torch according to claim 4, **characterised in that** the radial gas ducts (10) are mutually separated by annular-segment-shaped axial webs (14) which each comprise on the end thereof facing the torch neck (3) a portion having an enlarged inner diameter for forming stops (9) for the insulating tubing (6), the outer annular duct (11) being formed around the outer diameters of the webs (14).

6. Welding torch according to any of the preceding claims, **characterised in that** a mechanically rigid connection is provided between the torch connection block (2) and the outer tube (7) of the torch neck (3).

7. Welding torch according to claim 6, **characterised in that** the mechanically rigid connection is a metallic welded connection, a soldered connection, an adhesive connection or a screw connection.

8. Welding torch according to any of the preceding claims, **characterised in that** an inner annular duct (15) is provided between an inner wall of the insulating member (8) and an outer wall of the inner tube (5), the inner annular duct (15) being formed by enlarging the inner diameter of the insulating member (8) in portions and/or by reducing the inner tube (5) in portions.

9. Welding torch according to any of the preceding claims, **characterised in that** the insulating member (8) comprises on the side thereof facing away from the torch neck (3) an inner thread (17) for engaging into an outer thread (18) formed on the inner tube (5).

10. Welding torch according to claim 9, **characterised in that** a fluid seal is provided between the inner thread (17) of the insulating member (8) and the outer thread (18) of the inner tube (5).

11. Welding torch according to any of the preceding claims, **characterised in that** a torch head stop (16) for the insulating tubing (6) is provided in the torch head (4).

12. Welding torch according to any of the preceding claims, **characterised in that** the insulating member (8) is sealed towards the torch connection block (2) by a fluid seal or an O-ring.

## Revendications

1. Chalumeau soudeur (1) avec une alimentation en gaz protecteur, un bloc de raccord de chalumeau (2), un col de chalumeau (3) se raccordant à une extrémité au bloc de raccord de chalumeau (2) et une tête de chalumeau (4) prévue à l'autre extrémité du col de chalumeau (3), le col de chalumeau (3) présentant un tube intérieur (5), un tube extérieur (7) et un tuyau isolant (6) qui est prévu entre le tube intérieur (5) et le tube extérieur (7) et qui est prévu à l'extérieur du tube intérieur (5), le tuyau isolant (6) étant en contact direct avec le tube intérieur (5) et conduisant jusque dans le bloc de raccord de chalumeau (2), et un corps isolant (8) étant prévu dans le bloc de raccord de chalumeau (2) et à l'intérieur duquel le tube intérieur (5) conduit dans le bloc de raccord de chalumeau (2), **caractérisé en ce que**, sur son côté tourné vers le col de chalumeau (3), le corps isolant (8) est structuré avec formation d'au moins un canal de gaz radial (10), et un canal annulaire (11) extérieur, couplé au canal de gaz radial (10) au moins au nombre de un, étant prévu dans le bloc de raccord de chalumeau (2) autour du tube intérieur (5) pour la distribution d'un gaz protecteur, le corps isolant (8) présentant un arrêt ou une butée (9) pour le tuyau isolant (6), et le canal annulaire (11) extérieur étant prévu sur le côté de l'arrêt ou de la butée (9) qui est éloigné du col de chalumeau (3).

2. Chalumeau soudeur selon la revendication 1, **caractérisé en ce que** le tube intérieur (5) présente sur son côté extérieur des canaux de guidage de gaz (13) et/ou le tuyau isolant (6) présente sur son côté intérieur des canaux de guidage de gaz.

3. Chalumeau soudeur selon une des revendications précédentes, **caractérisé en ce que** le corps isolant (8) présente une section transversale axiale polygonale.

4. Chalumeau soudeur selon une des revendications précédentes, **caractérisé en ce que**, sur son côté tourné vers le col de chalumeau (3), le corps isolant (8) présente plusieurs fentes ou alésages répartis sur la circonférence du corps isolant (8) et conduisant à travers la paroi du corps isolant (8) pour la formation de canaux de gaz radiaux (10).

5. Chalumeau soudeur selon la revendication 4, **caractérisé en ce que** les canaux de gaz radiaux (10) sont séparés les uns des autres par des entretoises (14) axiales en forme de segment de cercle qui, à leur extrémité tournée vers le col de chalumeau (3), présentent respectivement un tronçon avec un diamètre intérieur agrandi pour la formation de butées (9) pour le tuyau isolant (6), le canal annulaire (11) extérieur étant constitué autour des diamètres extérieurs des entretoises (14).

6. Chalumeau soudeur selon une des revendications précédentes, **caractérisé en ce que**, entre le bloc de raccord de chalumeau (2) et le tube extérieur (7) du col de chalumeau (3), il est prévu une liaison mécaniquement fixe.

7. Chalumeau soudeur selon la revendication 6, **caractérisé en ce que** la liaison mécaniquement fixe est une liaison soudée métallique, une liaison brasée, une liaison collée ou une liaison vissée.

8. Chalumeau soudeur selon une des revendications précédentes, **caractérisé en ce qu'**un canal annulaire (15) intérieur est prévu entre une paroi intérieure du corps isolant (8) et une paroi extérieure du tube intérieur (5), le canal annulaire (15) intérieur étant constitué par un agrandissement par tronçons du diamètre intérieur du corps isolant (8) et/ou par une réduction par tronçons du tube intérieur (5).

9. Chalumeau soudeur selon une des revendications précédentes, **caractérisé en ce que** le corps isolant (8), sur son côté éloigné du col de chalumeau (3), présente un filet intérieur (17) pour l'engrènement dans un filet extérieur (18) constitué sur le tube intérieur (5).

10. Chalumeau soudeur selon la revendication 9, **caractérisé en ce qu'**il est prévu un joint liquide entre le filet intérieur (17) du corps isolant (8) et le filet extérieur (18) du tube intérieur (5).

11. Chalumeau soudeur selon une des revendications précédentes, **caractérisé en ce que**, dans la tête de chalumeau (4), il est prévu une butée de tête de chalumeau (16) pour le tuyau isolant (6).

12. Chalumeau soudeur selon une des revendications précédentes, **caractérisé en ce que** le corps isolant (8) est rendu étanche en direction du bloc de raccord de chalumeau (2) par un joint liquide ou un joint torique.
